# EUROPEAN PATENT SPECIFICATION

(11) **EP 3 726 050 B1**
(45) Date of publication and mention of the grant of the patent: **21.08.2024**
(21) Application number: 20169990.7
(22) Date of filing: 16.04.2020
(51) Int. Cl.: F03D 3/06

(54) **TURBINE SYSTEM WITH GUIDE STRIP**
TURBINENSYSTEM MIT FÜHRUNGSLEISTE
SYSTÈME DE TURBINE COMPORTANT UNE BANDE DE GUIDAGE

(30) Priority: 16.04.2019 BE 201905252
(43) Date of publication of application: 21.10.2020
(73) Proprietor: Mataro Holding BV, 4822 SN Breda (NL)
(72) Inventor: RIJKE, Reinier Johannes, 4822 SN Breda (NL)
(74) Representative: Winger

(56) References cited:
- WO-A1-02/052149
- CN-A- 101 265 880
- CN-A- 107 829 876
- FR-A1- 2 924 180
- KR-A- 20150 089 166
- US-A1- 2013 017 084

## Description

### Field of the invention

The invention generally concerns turbine systems for generating energy from a flowing fluid, and in particular turbine systems in which the orientation of the turbine blades can be controlled.

### Background of the invention

Within the prior art, a variety of turbine systems for generating energy from a flowing fluid such as water or wind are already known. These are typically constructed from one or more turbine blades (also called vanes) which are configured to execute a rotational movement about a rotation axis and are coupled to a turbine shaft which typically coincides with the rotation axis. The flowing fluid brings the turbine blades and hence also the turbine shaft into motion, and the mechanical energy associated with the resulting rotational moment is then converted into another usable energy form (e.g. electricity).

It is characteristic of the known turbine systems that the turbine blades are normally fixedly positioned and oriented relative to the co-rotating turbine shaft. However, by making the relative position and/or orientation of the vanes variable, typically a better energy yield can be achieved.

International patent application WO2015034096 for example describes a blade structure in which the blades, under the influence of the dynamic force of the fluid, can partially rotate between two extreme positions. This reduces the resistance of the blades, whereby the torque increases. However, because the orientation of the blade is varied merely passively (i.e. under the influence of the dynamic force), there is little control over this orientation and the optimal orientation cannot be set at each point along a revolution; the energy yield to be achieved is therefore limited. International patent application WO0040859A1 describes a turbine in which the blades are movable around the shaft and each blade is provided with a separate stepper motor. In this way, the rotational orientation of each turbine blade can be adjusted separately as a function of the position of the turbine blade in the flow. With such continuous orientation control, a desired angle of incidence relative to the direction of the flowing medium can always be achieved. In this way, a substantial improvement in the energy yield can be achieved. The disadvantage of this system however is that a separate motor is used for each blade. These are costly, vulnerable to faults and defects, and require their own energy source, whereby the energy yield obtained from the orientation control is partially nullified. WO02052149 A1 discloses another prior art turbine system.

There is therefore a need for a more efficient turbine system.

### Summary of the invention

It is an object of the present invention to provide a good turbine system for generating energy from a flowing fluid. This object is achieved by a system and/or a use according to the present invention, as defined in the independent claims.

It is an advantage of embodiments of the present invention that a greater energy yield can be achieved.

It is an advantage of embodiments of the present invention that the orientation of the turbine blade is continuously variable (in some cases between two extreme positions).

It is an advantage of embodiments of the present invention that the orientation of the turbine blade can be adjusted at each point along a revolution.

It is an advantage of embodiments of the present invention that no separate motor for each turbine blade is required.

It is an advantage of embodiments of the present invention that no separate energy source is required, but that the turbine blade is adjusted using the mechanical energy contained in the system.

It is an advantage of embodiments of the present invention that the number of components in which faults and/or defects may occur is limited.

In a first aspect, the present invention relates to a turbine system for generating energy from a flowing fluid, comprising: (i) a rotor shaft; (ii) at least one turbine blade coupled to the rotor shaft, wherein an orientation of at least a portion of the turbine blade is variable relative to the rotor shaft; and (iii) a guide strip coupled to the turbine blade portion, wherein the guide strip determines the orientation of the turbine blade portion relative to the rotor shaft, wherein the turbine blade portion is connected to a follower element for tracing the guide strip, wherein the follower element comprises a roller or slide shoe,
wherein the guide strip has a smooth profile, without a kink occurring in the profile. It is an advantage of embodiments of the present invention that the guide strip has a fluent profile, i.e. it does not have a kink in the profile or the profile does not follow a broken curve.

The guide strip may be a rail.

It is an advantage of embodiments of the present invention that a single guide strip can be used.

In some embodiments, the rotor shaft may stand perpendicularly to a flow direction of the fluid.

In some embodiments, the turbine system may comprise several turbine blades and the guide strip may be coupled to several turbine blades. It is an advantage that different turbine blades may be oriented at the same time.

In some embodiments, the turbine system may be a Darrieus-type turbine system. In some embodiments, the flowing fluid may be water.

In some embodiments, the turbine blade portion may be the entire turbine blade.

In some embodiments, the turbine blade portion may be merely a part of the entire turbine blade.

In some embodiments, a coupling between the turbine blade portion and the remainder of the turbine blade may comprise a rotational element.

In some embodiments, a coupling between the turbine blade and the rotor shaft may comprise a rotational element.

In some embodiments, the guide strip may be formed such that in operation, the orientation of the turbine blade portion relative to the rotor shaft varies through a revolution of the turbine blade.

In some embodiments, the guide strip may be formed as a non-circular loop.

In some embodiments, the turbine blade portion may be connected to a follower element for tracing the guide strip.

In some embodiments, the follower element may comprise a roller, a slide shoe, a ring or a pin.

The follower element may be one or more guiding wheels

In some embodiments, the guide strip may comprise a slot or an erect rib for guiding the follower element.

In some embodiments, a relative position of the guide strip may be fixed inside the turbine system.

In some embodiments, the system may comprise a generator and a blade driving means that both are positioned above the fluid, e.g. outside the water level.

It is an advantage of embodiments of the present invention that a driving system with bars to the blades, the bars being connected to a cam shaft, can be avoided. Such a system is sensitive to large loads and to dirt such as wood or reed, which may be present on a water surface. The latter often results in damage to the system.

It is an advantage of systems according to embodiments of the present invention that the systems can be driven at a constant tip speed ratio, whereby a single fixed shape of the guide strip is sufficient. The fixed shape may be selected particularly. In some embodiments, the turbine system may furthermore comprise: (iv) means for relative translation and/or rotation of the guide strip inside the turbine system. In a second aspect, the present invention concerns a use of a guide strip in a turbine system for orienting at least one portion of a turbine blade which is coupled to the guide strip the turbine system comprising:
- a rotor shaft;
- at least one turbine blade coupled to the rotor shaft, wherein an orientation of at least a portion of the turbine blade is variable relative to the rotor shaft, the guide strip being coupled to the turbine blade portion, wherein the guide strip determines the orientation of the turbine blade portion relative to the rotor shaft, wherein the turbine blade portion is connected to a follower element for tracing the guide strip, wherein the follower element comprises a roller or slide shoe, and
wherein the guide strip has a smooth profile, without a kink occurring in the profile. The various aspects may easily be combined with each other and the combinations thus also correspond to embodiments according to the present invention.

Specific and preferred aspects of the invention are specified in the attached independent and dependent claims. Features of the dependent claims may be combined with features of the independent claims and with features of other dependent claims as indicated, and not simply as expressly presented in the claims. These and other aspects of the invention will become clear and be explained with reference to the embodiment(s) described below.

### Brief Description of the Figures

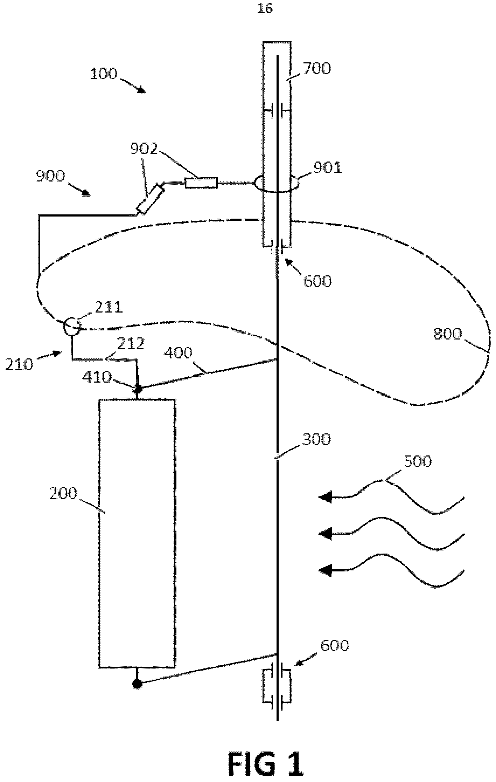

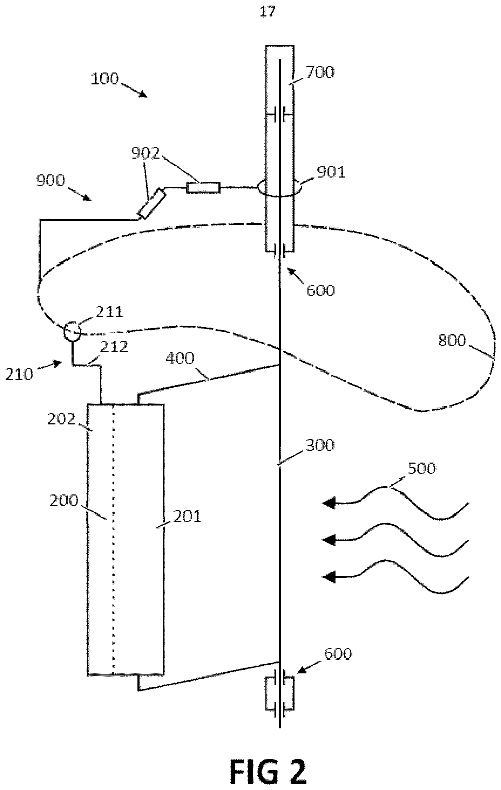

Figures 1 and 2 illustrate turbine systems according to exemplary embodiments of the present invention.

The figures are purely diagrammatic and not limitative. In the figures, the dimensions of some components may be exaggerated and not shown to scale for illustrative purposes.

Reference numbers in the claims should not be interpreted as restricting the scope of protection. In the various figures, the same reference numbers refer to the same or equivalent elements.

### Detailed Description of Illustrative Embodiments

The present invention will be described in relation to particular embodiments and with reference to specific drawings, but the invention is not restricted thereto and is limited solely by the claims. The drawings described are purely diagrammatic and not limitative. In the drawings, for illustrative purposes, the dimensions of some elements are exaggerated and not drawn to scale. The dimensions and relative dimensions sometimes do not correspond to the actual practical embodiment of the invention.

Furthermore, the terms "first", "second" and similar in the description and in the claims serve to distinguish equivalent elements and not necessarily to describe an order in either time or space, or in priority or in any other way. It should be understood that the terms used in this way are interchangeable under certain circumstances, and that the embodiments of the invention described herein are suitable for working in other orders than described or shown herein.

In addition, the terms "above", "below", "in front of", "behind" and similar in the description and in the claims are used for descriptive purposes and not necessarily to define relative positions. It should be understood that the terms used in this way may under given circumstances be exchanged for their antonyms, and that the embodiments of the invention described herein are also suitable for working with other orientations than described or shown herein.

It should be noted that the term "comprise" as used in the claims should not be interpreted as limited to the means described thereafter; this term does not exclude other elements or steps. It should be interpreted as specifying the presence of the indicated features, values, steps or components to which reference is made, but does not exclude the presence or addition of one or more other features, values, steps or components or groups thereof. Therefore the scope of the expression "a device comprising means A and B" should not be limited to devices which consist solely of components A and B. It means that with regard to the present invention, A and B are the only relevant components of the device.

Reference throughout this specification to "one embodiment" or "an embodiment" means that a specific feature, structure or characteristic described in connection with the embodiment is included in at least one embodiment of the present invention. Therefore the expressions "in one embodiment" or "in an embodiment" at various points throughout the specification need not necessarily each refer to the same embodiment, but may well do so. Furthermore, the specific features, structures or characteristics may be combined in any suitable manner in one or more embodiments, as will be clear to an average person skilled in the art on the basis of this publication.

Similarly, it should be appreciated that the various features of the invention given in the description of exemplary embodiments of the invention may sometimes be grouped into a single embodiment, figure or description thereof, with the aim of streamlining the disclosure and assisting with comprehension of one or more of the various inventive aspects. This method of disclosure should not be interpreted as reflecting an intention that the invention requires more features than explicitly stated in each claim. Rather, as the following claims show, inventive aspects exist in less than all features of a single, previously disclosed embodiment. Therefore, the claims following the detailed description are hereby explicitly included in this detailed description, with each autonomous claim as a separate embodiment of this invention.

Furthermore, while some embodiments described herein comprise some but not other features included in other embodiments, combinations of features of different embodiments are considered to lie within the scope of the invention and form different embodiments, as will be understood by the skilled person. For example, in the claims which follow, any embodiments described may be used in any combination.

In the description provided here, numerous specific details are emphasised. It should however also be understood that embodiments of the invention may be implemented without these specific details. In other cases, well-known methods, structures and techniques are not presented in detail, in order to keep this description concise.

In a first aspect, the present invention concerns a turbine system for generating energy from a flowing fluid, comprising (i) a rotor shaft; (ii) at least one turbine blade coupled to the rotor shaft, wherein an orientation of at least a portion of the turbine blade is variable relative to the rotor shaft; and (iii) a guide strip coupled to the turbine blade portion, wherein the guide strip determines the orientation of the turbine blade portion relative to the rotor shaft.

In some embodiments, the rotor shaft may stand perpendicularly to a flow direction of the fluid.

In some embodiments, the turbine system may be fixed or floating relative to the fluid.

In some embodiments, the turbine system may be a Darrieus-type turbine system.

The flowing fluid is water.

The flowing water may for example result from tidal effects, natural streams (e.g. rivers) or flow resulting from human influence (e.g. canals or drainage systems). Under the influence of the flowing medium, the turbine blade typically executes a rotational movement and thus transfers a torque to the rotor shaft. In some embodiments, the turbine system may comprise several turbine blades, e.g. 2, 3, 4, 5, 6, 8, 20 or more blades.

In some embodiments, the turbine blade portion may be the entire turbine blade. In such embodiments, a coupling between the turbine blade and the rotor shaft may comprise a rotational element. Such a rotational element between the turbine blade and the rotor shaft advantageously allows variation of the orientation of the turbine blade relative to the co-rotating rotor shaft. The rotational element may for example be a mechanical joint such as a ball joint, bearing or hinge.

In alternative or complementary embodiments, the turbine blade portion may merely be a part (e.g. a segment) of the entire turbine blade. In such embodiments, a coupling between the turbine blade portion and the rest of the turbine blade may comprise a rotational element (see above). Such a rotational element between the turbine blade and rotor shaft advantageously allows variation of the orientation of the turbine blade portion relative to the rest of the turbine blade.

In some embodiments, the above-mentioned elements may be combined. In this way, advantageously both the orientation of the part of the turbine blade and of the rest of the turbine blade may be adjusted separately. In such embodiments, a coupling between the turbine blade and the rotor shaft may comprise a rotational element, and a coupling between the turbine blade portion and the rest of the turbine blade may comprise a rotational element. In these embodiments, two separate guide strips may be used (e.g. a first for determining the orientation of the entire turbine blade, and a second for determining the orientation of the part thereof), or a single guide strip. In some embodiments, the entire turbine blade may be coupled via a first coupling to a first guide strip, and the part thereof may be coupled via a second coupling to a second guide strip. Thus for example it can be achieved that the orientation of the part can be varied separately (e.g. asynchronously) from that of the rest of the turbine blade. In some embodiments, the entire turbine blade may be coupled via a first coupling to a guide strip and a part thereof coupled via a second coupling to the same guide strip, wherein the first coupling is situated at a selected distance from the second coupling. This may achieve for example the possibility of varying the orientation of the part and that of the rest of the turbine blade synchronously throughout a revolution, e.g. wherein the orientation of the part leads or trails that of the rest of the turbine blade by a selected phase.

In some embodiments, the guide strip may be formed such that in operation, the orientation of the turbine blade portion relative to the rotor shaft (e.g. the angle of the turbine blade portion relative to the tangent to the described revolution) may be varied along a revolution of the turbine blade. In some embodiments, the guide strip may be formed as a non-circular loop. The guide strip is preferably formed such that the orientation of the turbine blade portion which is set thereby may be adapted (e.g. optimised) at different points of the revolution (e.g. throughout the entire revolution) in order to improve the energy yield of the turbine system.

In some embodiments, the turbine blade portion may be connected to a follower element for tracing the guide strip. In some embodiments, the follower element may be a roller (e.g. a tandem roller), a slide shoe, a ring or a pin. In some embodiments, the follower element may comprise a tiller. In some embodiments, the tiller may be directed forward or backward relative to a rotational direction of the turbine blade. In some embodiments, the guide strip is made of a rigid material such as a rigid metal or rigid plastic. Here, the rigidity of the material is of such a nature that the guide strip can withstand the forces exerted thereon during operation of the turbine system (e.g. via the coupled turbine blade) without substantial deformation. In some embodiments, the guide strip may comprise a slot or an erect rib for guiding the follower element. The guide strip is typically adapted as a function of the selected follower element (or vice versa). Thus the guide strip may be provided with a slot for guiding a follower element in the form of a pin, or with one or two erect ribs for guiding a follower element in the form of a roller. The roller may be a wheel or guiding wheel. The guide strip may be a rail.

In some embodiments, a relative position of the guide strip may be fixed inside the turbine system. This advantageously allows the guide strip to be fixedly mounted inside the turbine system.

In other embodiments, a relative position of the guide strip may be variable inside the turbine system. This advantageously allows the position and/or orientation of the guide strip to be adapted, for example as a function of the flow direction and flow speed of the fluid. This is particularly advantageous when this flow direction and/or speed is variable (such as a tidal flow or alternating wind or water flow), so that the orientation of the turbine blade portion can always be adapted to the present flow features. In these embodiments, the turbine system may furthermore comprise: (iv) means for relative translation and/or rotation of the guide strip inside the turbine system.

In some embodiments, the turbine system may furthermore comprise an energy converter (e.g. a pump or generator).

In a second aspect, the present invention concerns a use of a guide strip in a turbine system for orientation of at least a portion of a turbine blade which is coupled to the guide strip.

The invention will now be described with reference to a detailed description of various examples. It is however clear that other embodiments of the present invention may also be designed, according to the knowledge of the person skilled in the art, without deviating from the technical teaching of the present invention. The invention is then only limited by the appended claims.

### Example 1: Turbine system with guide strip in which the entire turbine blade is controlled

We refer to figure 1 which diagrammatically shows a turbine system 100 according to embodiments of the present invention. The turbine system 100 comprises a turbine blade 200 which is coupled to a rotor shaft 300 by means of connecting rods 400. The rotor shaft 300 may be oriented horizontally, vertically or at an angle in-between relative to the ground and/or water surface, but preferably stands perpendicularly to the dominant flow direction of the flowing medium 500 (e.g. water). The rotor shaft 300 is rotatable thanks to bearings 600 of the turbine system 100. The turbine system 100 may be configured to be fixed or floating relative to the fluid.

Under the influence of the flowing medium 500, the turbine blade 200 is set in motion and rotates (e.g. on a circular path) around an axis which typically coincides with a theoretical centre line of the rotor shaft 300. The connecting rods 400 transfer the resulting generated torque of the turbine blade 200 to the rotor shaft 300, causing this to co-rotate. An energy converter 700 connected to the rotor shaft 300 converts the mechanical energy of the rotor shaft 300 and turbine blade 200 into another usable energy form (e.g. electricity).

In the embodiment of figure 1, the connecting rods 400 are connected to the turbine blade 200 by means of rotational elements 410 (e.g. ball joints or hinges). As a result, the orientation of the turbine blade 200 is variable relative to the co-rotating rotor shaft 300 in the form of a variable angle of the turbine blade 200 relative to the tangent to the described revolution.

The turbine system 100 also contains a guide strip 800, and the turbine blade 200 is coupled to the guide strip 800 by means of a follower element 210. Figure 1 shows the follower element 210 as a ring 211 around the guide strip 800 at the end of a tiller 212. By this coupling, the guide strip 800 determines the orientation of the turbine blade 200: because the follower element 210 necessarily traces the guide strip 800, the variable angle of the turbine blade 200 is set by the tiller 212 at each point on the revolution. The guide strip 800 is here formed such that, because of the set orientation of the turbine blade 200, a higher energy yield for the turbine system 100 is obtained.

The guide strip 800 may be firmly fixed (not shown) inside the turbine system 100 or may be positioned variably relative to the turbine system 100, e.g. via means of rotation 901 and/or translation 902. The variable positioning allows this to be adapted as a function of the flow conditions (e.g. flow direction and flow speed).

### Example 2: Turbine system with guide strip in which a segment of the turbine blade is controlled

We now refer to figure 2 which shows diagrammatically an alternative turbine system 100 according to embodiments of the present invention. The turbine system 100 comprises a turbine blade 200 which is coupled to a rotor shaft 300 by means of connecting rods 400. The rotor shaft 300 may be oriented horizontally, vertically or at an angle in-between relative to the ground and/or water surface, but preferably stands perpendicularly to the dominant flow direction of the flowing medium 500 (e.g. water). The rotor shaft 300 is rotatable thanks to bearings 600 of the turbine system 100. The turbine system 100 may be configured to be fixed or floating relative to the fluid.

Under the influence of the flowing medium 500, the turbine blade 200 is set in motion and rotates (e.g. on a circular path) around an axis which typically coincides with a theoretical centre line of the rotor shaft 300. The connecting rods 400 transfer the resulting torque of the turbine blade 200 to the rotor shaft 300, causing this to co-rotate. An energy converter 700 connected to the rotor shaft 300 converts the mechanical energy of the rotor shaft 300 and turbine blade 200 into another usable energy form (e.g. electricity).

In the embodiment of figure 2, the turbine blade 200 is divided into a first segment 201 and a second segment 202, which are connected together by means of one or more rotational elements (e.g. hinge or ball joint). As a result, the orientation of the second segment 202 is variable relative to the first segment 201, in the form of a variable angle between the two. The connecting rods 400 are here fixedly connected to the first segment 201 so that the orientation of the first segment 201 relative to the co-rotating rotor shaft 300 is here fixed.

The turbine system 100 also comprises a guide strip 800, and the second turbine blade segment 202 is coupled to the guide strip 800 by means of a follower element 210. Figure 2 shows the follower element 210 as a ring 211 around the guide strip 800 at the end of a tiller 212. By this coupling, the guide strip 800 determines the orientation of the second turbine segment 202: because the follower element 210 necessarily traces the guide strip 800, the variable angle of the second turbine segment 202 is set by the tiller 212 at each point on the revolution. The guide strip 800 is here formed such that, because of the set orientation of the second turbine segment 202, a higher energy yield for the turbine system 100 is obtained.

The guide strip 800 may be firmly fixed (not shown) inside the turbine system 100 or may be positioned variably 900 relative to the turbine system 100, e.g. via means of rotation 901 and/or translation 902. The variable positioning 211 allows this to be adapted as a function of the flow conditions (e.g. flow direction and flow speed). As shown in figure 2, the connecting rods 400 are firmly attached to the first turbine blade segment 201 and the orientation thereof relative to the co-rotating rotor shaft 300 is thus fixed. It will however be clear that the connecting rods 400 may also be connected by means of rotational elements 410 as described in example 1, so that the orientation of the first segment 201 is also variable. By means of an additional follower element on the first segment, connected to the same or to an additional guide strip, the orientation (e.g. angle) of the first segment may then be set separately relative to the second segment.

## Claims

1. Turbine system (100) for generating energy from a flowing fluid (500) being water, the turbine system comprising:
- a rotor shaft (300);
- at least one turbine blade (200) coupled to the rotor shaft (300), wherein an orientation of at least a portion of the turbine blade (200) is variable relative to the rotor shaft (300); and
- a guide strip (800) coupled to the turbine blade portion, wherein the guide strip (800) determines the orientation of the turbine blade portion relative to the rotor shaft (300), wherein the turbine blade portion is connected to a follower element (210) for tracing the guide strip, wherein the follower element comprises a roller or slide shoe,
wherein the guide strip (800) has a smooth profile, without a kink occurring in the profile.

2. Turbine system (100) according to claim 1, wherein the rotor shaft (300) stands perpendicularly to a flow direction of the fluid (500).

3. Turbine system (100) according to any one of the preceding claims, being a Darrieus-type turbine system.

4. Turbine system (100) according to any one of the preceding claims,
wherein the turbine blade portion is the entire turbine blade (200) or
wherein the turbine blade portion is merely a part (202) of the entire turbine blade (200) or
wherein the turbine blade portion is merely a part (202) of the entire turbine blade (200) and wherein a coupling between the turbine blade portion (202) and the remainder of the turbine blade (200) comprises a rotational element (203).

5. Turbine system (100) according to any one of the preceding claims, wherein a coupling between the turbine blade (200) and the rotor shaft (300) comprises a rotational element (410).

6. Turbine system (100) according to any one of the preceding claims, wherein the guide strip (800) is formed such that in operation, the orientation of the turbine blade portion (202) relative to the rotor shaft (300) varies along a revolution of the turbine blade (200).

7. Turbine system (100) according to claim 6, wherein the guide strip (800) is formed as a non-circular loop.

8. Turbine system (100) according to the previous claim, wherein the follower element (210) is one or more guiding wheels and wherein the guide strip is a rail.

9. Turbine system (100) according to claim 1, wherein the follower element (210) comprises a slide shoe, a ring (211) or a pin and/or wherein the guide strip (800) comprises a slot or an erect rib for guiding the follower element (210).

10. Turbine system (100) according to any one of the preceding claims, wherein a relative position of the guide strip (800) is fixed inside the turbine system (100).

11. Turbine system (100) according to any one of claims 1 or 10, furthermore comprising means for relative translation (902) and/or rotation (901) of the guide strip (800) inside the turbine system (100).

12. Use of a guide strip (800) in a turbine system (100) for orienting at least a portion of a turbine blade (200) which is coupled to the guide strip (800),
the turbine system comprising:
- a rotor shaft (300);
- at least one turbine blade (200) coupled to the rotor shaft (300), wherein an orientation of at least a portion of the turbine blade (200) is variable relative to the rotor shaft (300), the
guide strip (800) being coupled to the turbine blade portion, wherein the guide strip (800) determines the orientation of the turbine blade portion relative to the rotor shaft (300), wherein the turbine blade portion is connected to a follower element (210) for tracing the guide strip, wherein the follower element comprises a roller or slide shoe, and
wherein the guide strip (800) has a smooth profile, without a kink occurring in the profile.

## Patentansprüche

1. Turbinensystem (100) zum Erzeugen von Energie aus einem strömenden Fluid (500), das Wasser ist, wobei das Turbinensystem Folgendes umfasst:
- eine Rotorwelle (300);
- mindestens eine Turbinenblatt (200), die an die Rotorwelle (300) gekoppelt ist, wobei eine Ausrichtung mindestens eines Abschnitts der Turbinenblatt (200) relativ zu der Rotorwelle (300) variabel ist; und
- einen Führungsstreifen (800), der an den Turbinenblattabschnitt gekoppelt ist, wobei der Führungsstreifen (800) die Ausrichtung des Turbinenblattabschnitts relativ zu der Rotorwelle (300) bestimmt, wobei der Turbinenblattabschnitt mit einem Nachläuferelement (210) zum Verfolgen des Führungsstreifens verbunden ist, wobei das Nachläuferelement eine Walze oder einen Gleitschuh umfasst,
wobei der Führungsstreifen (800) ein glattes Profil, ohne Knick in dem Profil, aufweist.

2. Turbinensystem (100) nach Anspruch 1, wobei die Rotorwelle (300) senkrecht zu einer Strömungsrichtung des Fluids (500) steht.

3. Turbinensystem (100) nach einem der vorstehenden Ansprüche, das ein Turbinensystem vom Darrieus-Typ ist.

4. Turbinensystem (100) nach einem der vorstehenden Ansprüche, wobei der Turbinenblattabschnitt die gesamte Turbinenblatt (200) ist oder wobei der Turbinenblattabschnitt nur ein Teil (202) der gesamten Turbinenblatt (200) ist oder
wobei der Turbinenblattabschnitt nur ein Teil (202) der gesamten Turbinenblatt (200) ist und wobei eine Kopplung zwischen dem Turbinenblattabschnitt (202) und dem Rest der Turbinenblatt (200) ein Drehelement (203) umfasst.

5. Turbinensystem (100) nach einem der vorstehenden Ansprüche, wobei eine Kopplung zwischen der Turbinenblatt (200) und der Rotorwelle (300) ein Drehelement (410) umfasst.

6. Turbinensystem (100) nach einem der vorstehenden Ansprüche, wobei der Führungsstreifen (800) so gebildet ist, dass in Betrieb die Ausrichtung des Turbinenblattabschnitts (202) relativ zu der Rotorwelle (300) entlang einer Umdrehung der Turbinenblatt (200) variiert.

7. Turbinensystem (100) nach Anspruch 6, wobei der Führungsstreifen (800) als nicht kreisförmige Schleife gebildet ist.

8. Turbinensystem (100) nach dem vorstehenden Anspruch, wobei das Nachläuferelement (210) ein oder mehrere Führungsräder ist und wobei der Führungsstreifen eine Schiene ist.

9. Turbinensystem (100) nach Anspruch 1, wobei das Nachläuferelement (210) einen Gleitschuh, einen Ring (211) oder einen Stift umfasst und/oder wobei der Führungsstreifen (800) einen Schlitz oder eine aufrechte Rippe zum Führen des Nachläuferelements (210) umfasst.

10. Turbinensystem (100) nach einem der vorstehenden Ansprüche, wobei eine relative Position des Führungsstreifens (800) im Inneren des Turbinensystems (100) fixiert ist.

11. Turbinensystem (100) nach einem von Anspruch 1 oder 10, weiter umfassend Mittel zur relativen Verschiebung (902) und/oder Drehung (901) des Führungsstreifens (800) im Inneren des Turbinensystems (100).

12. Verwendung eines Führungsstreifens (800) in einem Turbinensystem (100) zum Ausrichten mindestens eines Abschnitts einer Turbinenblatt (200), der an den Führungsstreifen (800) gekoppelt ist, wobei das Turbinensystem Folgendes umfasst:
- eine Rotorwelle (300);
- mindestens eine Turbinenblatt (200), die an die Rotorwelle (300) gekoppelt ist, wobei eine Ausrichtung mindestens eines Abschnitts der Turbinenblatt (200) relativ zu der Rotorwelle (300) variabel ist; wobei
der Führungsstreifen (800) an den Turbinenblattabschnitt gekoppelt ist, wobei der Führungsstreifen (800) die Ausrichtung des Turbinenblattabschnitts relativ zu der Rotorwelle (300) bestimmt, wobei der Turbinenblattabschnitt mit einem Nachläuferelement (210) zum Verfolgen des Führungsstreifens verbunden ist, wobei das Nachläuferelement eine Walze oder einen Gleitschuh umfasst, und
wobei der Führungsstreifen (800) ein glattes Profil, ohne Knick in dem Profil, aufweist.

## Revendications

1. Système de turbine (100) pour générer de l'énergie à partir d'un fluide (500) en écoulement, étant de l'eau, ledit système de turbine comprenant :
- un arbre de rotor (300) ;
- au moins une pale de turbine (200) couplée à l'arbre de rotor (300), dans lequel une orientation d'au moins une partie de ladite pale de turbine (200) est variable par rapport à l'arbre de rotor (300) ; et
- une bande de guidage (800) couplée à la partie de la pale de turbine, dans laquelle la bande de guidage (800) détermine l'orientation de la partie de la pale de turbine par rapport à l'arbre de rotor (300), dans lequel la partie de la pale de turbine est connectée à un élément suiveur (210) pour suivre la bande de guidage, dans lequel l'élément suiveur comprend un rouleau ou une glissière, dans lequel la bande de guidage (800) a un profil lisse, sans qu'un coude ne se produise dans le profil.

2. Système de turbine (100) selon la revendication 1, dans lequel l'arbre de rotor (300) est perpendiculaire à une direction d'écoulement du fluide (500).

3. Système de turbine (100) selon l'une quelconque des revendications précédentes, étant un système de turbine de type Darrieus.

4. Système de turbine (100) selon l'une quelconque des revendications précédentes,
dans lequel la partie de la pale de turbine est l'ensemble de la pale de turbine (200) ou dans lequel la partie de la pale de turbine est seulement une partie (202) de l'ensemble de la pale de turbine (200) ou dans lequel la partie de la pale de turbine est seulement une partie (202) de l'ensemble de la pale de turbine (200) et dans lequel un couplage entre la partie de la pale de turbine (202) et le reste de la pale de turbine (200) comprend un élément rotatif (203).

5. Système de turbine (100) selon l'une quelconque des revendications précédentes, dans lequel un couplage entre la pale de turbine (200) et l'arbre de rotor (300) comprend un élément rotatif (410).

6. Système de turbine (100) selon l'une quelconque des revendications précédentes, dans lequel la bande de guidage (800) est formée de telle sorte qu'en fonctionnement, l'orientation de la partie de la pale de turbine (202) par rapport à l'arbre de rotor (300) varie au cours d'une révolution de la pale de turbine (200).

7. Système de turbine (100) selon la revendication 6, dans lequel la bande de guidage (800) est formée comme une boucle non circulaire.

8. Système de turbine (100) selon la revendication précédente, dans lequel l'élément suiveur (210) est une ou plusieurs roues de guidage et dans lequel la bande de guidage est un rail.

9. Système de turbine (100) selon la revendication 1, dans lequel l'élément suiveur (210) comprend une glissière, un anneau (211) ou une goupille et/ou dans lequel la bande de guidage (800) comprend une fente ou une nervure dressée pour guider l'élément suiveur (210).

10. Système de turbine (100) selon l'une quelconque des revendications précédentes, dans lequel une position relative de la bande de guidage (800) est fixe à l'intérieur du système de turbine (100).

11. Système de turbine (100) selon l'une quelconque des revendications 1 ou 10, comprenant en outre des moyens pour la translation relative (902) et/ou la rotation (901) de la bande de guidage (800) à l'intérieur du système de turbine (100).

12. Utilisation d'une bande de guidage (800) dans un système de turbine (100) pour orienter au moins une partie d'une pale de turbine (200) qui est couplée à la bande de guidage (800),
ledit système de turbine comprenant :
- un arbre de rotor (300) ;
- au moins une pale de turbine (200) couplée à l'arbre de rotor (300), dans lequel une orientation d'au moins une partie de ladite pale de turbine (200) est variable par rapport à l'arbre de rotor (300), la bande de guidage (800) étant couplée à la partie de la pale de turbine, dans lequel la bande de guidage (800) détermine l'orientation de la partie de la pale de turbine par rapport à l'arbre de rotor (300), dans lequel la partie de la pale de turbine est connectée à un élément suiveur (210) pour suivre la bande de guidage, dans lequel l'élément suiveur comprend un rouleau ou une glissière, et dans lequel la bande de guidage (800) a un profil lisse, sans qu'un coude ne se produise dans le profil.
